# EUROPÄISCHE PATENTANMELDUNG

(11) **EP 1 852 494 A2**
(43) Veröffentlichungstag der Anmeldung: **07.11.2007**
(21) Anmeldenummer: 07450078.6
(22) Anmeldetag: 26.04.2007
(51) Int. Cl.: C10L 1/02

(54) **Verwendung der bei der Biodieselerzeugung anfallenden Glycerinphase als Brennstoff**

(30) Priorität: 05.05.2006 AT 3722006 U
(71) Anmelder: Wopfinger Baustoffindustrie GmbH, 2754 Waldegg (AT)
(72) Erfinder: Tisch, Manfred, 2732 Würflach (AT)
(74) Vertreter: Sonn & Partner Patentanwälte

(57) **Zusammenfassung**

Beschrieben wird die Verwendung der bei der Biodieselerzeugung anfallenden Glycerinphase als Brennstoff zur direkten Erwärmung eines zu erwärmenden Materials.

## Beschreibung

Die Erfindung betrifft die Verwendung der bei der Biodieselerzeugung anfallenden Glycerinphase als Brennstoff.

Unter Glycerinphase wird im Allgemeinen das Glycerin-hältige Nebenprodukt verstanden, das bei der Biodieselerzeugung anfällt. Sie ist eine nicht explosive, viskose, methanolhältige, dunkle Flüssigkeit und schwer zündbar. Allgemein wird bereits seit längerem versucht eine Möglichkeit zu schaffen, die Glycerinphase einer Verwertung zuzuführen.

Einige Studien in letzter Zeit haben gezeigt, dass die Glycerinphase gut umweltverträglich ist und als erneuerbarer Energieträger in Form eines ergänzenden, energiespendenden Brennstoffs in Biomasseanlagen zur Wärme-, aber auch zur Stromerzeugung von lokalen, regionalen und überregionalen Haushalten, Gewerbebetrieben sowie Industrie eingesetzt werden kann.

Gute Ergebnisse liefert die Glycerinzufeuerung im Hinblick auf die Emissionen. Beispielsweise ergibt die Verbrennung der Glycerinphase, verglichen mit der Verbrennung von Holzschnitzel, aufgrund ihrer niedrigen Schwefel- und Chlorkonzentrationen eine Minderung im SO₂- und HCl-Ausstoß. Das Gleiche kann hinsichtlich des Stickstoffs beobachtet werden, der bei der Verbrennung der Glycerinphase - im Vergleich zu Hackgut - wesentlich geringere NOₓ-Emissionen verursacht.

Die Versuchsreihen zu den Studien haben allerdings ergeben, dass die Nutzung der Glycerinphase als Brennstoff nicht ganz unproblematisch ist. So entstehen im Vergleich zur Verbrennung von beispielsweise Hackschnitzel erhöhte Mengen an Asche, Flugasche (Flugstaub) - nachstehend auch als Asche/Staub bezeichnet - und damit einhergehend auch erhöhte Mengen an Aerosolen, was von dem üblichen hohen Kaliumgehalt der Glycerinphase und dem Verhalten des Kalium während der Verbrennung herrührt. Die Asche/Staub und Aerosole lagern sich an den Oberflächen der in Heizwerken üblichen Wärmetauschern oder Kesselanlagen an, in denen das WärmeÜbertragungsmedium (Wasser oder Dampf) aufgeheizt wird. Mit der Zeit werden die Oberflächen stark oder gar zur Gänze verlegt, wodurch die Wirksamkeit der Wärmetauscher oder Kesselanlagen wesentlich beeinträchtigt wird. Ohne effiziente und vor allem regelmäßige, in kurzen Zeitabständen vorgenommene Reinigung der Wärmetauscher oder Kesselanlagen kann ein zuverlässiger Betrieb der Wärmetauscher oder Kesselanlagen und damit des gesamten Heizwerks nicht gewährleistet werden. Weiters ist eine Umrüstung bzw. Aufrüstung der Betriebsanlagen mit geeigneten Filteranlagen unumgänglich.

Eine Verbrennung der Glycerinphase ist auch nicht ohne weiteres möglich. Die Glycerinphase ist für die Nutzung als Brennstoff, insbesondere als höherwertiger Brennstoff, entsprechend (vor)zubehandeln und mittels erheblichen technischen und energetischem Aufwand zerlegt werden (Aufspaltung der Glycerinphase), um eine reibungslose Verbrennung bzw. einen störungsfreien Ablauf zu gewährleisten. Unter Zugabe von Chemikalien und evtl. anschließendem Verdampfen der Glycerinphase entstehen etwa 50 % Substanz mit einem höheren Heizwert und etwa 50 % Nebenbestandteile, welche zum Teil Abfall, wie etwa Salze, etc. sind, für die derzeit keine Verwertbarkeit besteht und die damit zu entsorgen sind. Dieser energetische und technische Aufwand ist somit ökologisch nicht sinnvoll.

Die US 2004/0111955 A1 beschreibt einen Kraftstoff mit einer Wasser-in-Öl-Emulsion und einem niedrigmolekularen oberflächenaktiven Mittel, wobei der Kraftstoff unter Anwendung eines Niedrigenergie-Verfahrens erzeugt wird. Genauer gesagt wird ein Herstellungsverfahren eines Kraftstoffs geoffenbart, bei dem Diesel mit Wasser emulgiert wird und als weitere Komponenten niedrigmolekulare oberflächenaktive Mittel, darunter natürliche Fette, nicht-ionische und ionische oberflächenaktive Mittel, cooberflächenaktive Mittel, fettige Säuren und deren Aminosalze, eingesetzt werden. Als Emulgator bzw. als Stabilisator kann u.a. eine mit einer Hydrocarbyl-Gruppe substituierte Carbonsäure, ein Reaktionsprodukt derselben oder ein reaktives Äquivalent davon mit einem Alkohol verwendet werden. Beispielsweise wird als Stabilisator ein Ester verwendet, der aus Carbonsäure gebildet wird. Glycerin wird in Zusammenhang mit einem der in Frage kommenden veresterten Stabilisatoren genannt, wobei Glycerin mit der Carbonsäure verestert wird. Der so hergestellte Kraftstoff wird in Verbrennungsmotoren und/oder in Verbrennungseinrichtungen eingesetzt, wobei als verwendbare Brennapparate mit offener Flamme eine Reihe von möglichen Öfen erwähnt sind, wie z.B. Zementrostöfen. Glycerin wird nicht als solches als Bestandteil des Kraftstoffs genannt; vielmehr lediglich in Zusammenhang mit der Veresterung der Carbonsäure, wobei die mit Glycerin veresterte Carbonsäure der Diesel-Wasser-Emulsion als Stabilisator beigemengt wird.

Die JP 2003096473 A beschreibt ein Verfahren zur Herstellung von Dieselöl aus essbarem Öl (Biodiesel). Das Verfahren umfasst zunächst die Destillierung von überschüssigem Methanol nach einer Veresterung und die Trennung der leichten Flüssigkeitsschicht von der schweren Flüssigkeitsschicht. Die leichte Flüssigkeitsschicht enthält Fettsäure-Ester und die schwere Flüssigkeitsschicht enthält Glycerin. Nach der Trennung wird die leichte Flüssigkeit mit Wasser gewaschen, um die wasserlöslichen Anteile in Form von Abwasser zu entfernen. Der letzte Verfahrensschritt besteht in der Verdampfung des Abwassers mittels der schweren Flüssigkeit, die als Brennstoff dient, um aus der Abwärme Dampf zu erhalten. Welche Art der Verbrennung genau verwendet wird, ist der JP 2003096473 A nicht zu entnehmen.

Die vor der Verbrennung vorgenommene Waschung der leichten Flüssigkeit erfolgt laut computerunterstützter Übersetzung der Beschreibung ins Englische unter Verwendung von 20 % Wasser bezogen auf das Gewicht der leichten Flüssigkeit, wobei in der leichten Flüssigkeit Fettsäure-Methyl-Ester und weiters geringe Mengen, d.h. 0,01 %, an Glycerin enthalten sind (Dieselphase). Das wenige Glycerin gelangt in das durch die Waschung entstandene Abwasser, das anschließend verdampft wird. Die Verdampfung wird mittels der schweren Flüssigkeit (Glycerinphase) als Brennstoff vorgenommen. Gemäß Beispiel 1 wurden 8,8 kg leichte Flüssigkeit, also Dieselphase, und 1,6 kg Glycerinphase (als Brennstoff für das Waschwasser) erhalten. Da die Dieselphase mit 20 % Wasser bezogen auf das Gewicht der Dieselphase gewaschen wird, ergibt dies eine Menge von etwa 1,7 kg an Abwasser, das verdampft werden soll. Diese Menge an Wasser ist allerdings zu hoch, um in einer offenen Flamme verdampft zu werden. Aufgrund der Hitze der offenen Flamme würde das Wasser sofort verdampfen und die offene Flamme durch den Druck ersticken. Somit ist davon auszugehen, dass das Waschwasser gemäß der JP 2003096473 A nur in einem Wärmetauscher abgedampft werden kann.

Die US 5,718,735 A beschreibt ein Verfahren zur Herstellung von hocherhitzbaren Kraftstoffprodukten. Ein monomerischer Polyalkohol, z.B. Ethylenglycole und Glycerin, wird einer Kohlenwasserstoff-Mischung mit getrocknetem Klärschlamm zugegeben und mit einem Puzzolan vermengt.

Die WO 01/12756 A2 bezieht sich auf einen Treibstoff für selbstzündende Kraftmaschinen, wobei ein Nebenprodukt aus Glycerin, Seifen, Wasser und Methanol verwendet wird, das bei der Umesterung von pflanzlichen und/oder tierischen Fetten und Ölen mit Methanol anfällt.

Die DE 2 542 671 A1 bezieht sich auf ein Verfahren zum Verbrennen eines Emulsionsöls, wobei das Emulsionsöl unter Rückführung des erhaltenen Verbrennungsabgases zu einer Verbrennungskammer verbrannt wird. Glycerin wird neben anderen aliphatischen Alkoholen lediglich als Ersatzstoff genannt, der anstatt dem Öl beigemengtes Wasser verwendet werden kann.

Es ist nun Aufgabe der vorliegenden Erfindung, eine neue und effektive Verwertung für die als Nebenprodukt zur Verfügung stehende Glycerinphase zu schaffen.

Diese Aufgabe wird erfindungsgemäß durch die Verwendung der Glycerinphase als Brennstoff zur direkten Erwärmung eines zu erwärmenden Materials gelöst.

Die erfindungsgemäße Verwendung zur direkten Erwärmung eines zu erwärmenden Materials hat den Vorteil, dass die Glycerinphase effektiv genutzt werden kann und die bei der Verbrennung entstehenden Mengen an Asche/Staub und Aerosolen keine Ablagerungen an Wärmeübertragungsflächen bilden können. Da die Flamme nicht auf Anlagenteile einer Feuerungsanlage gerichtet ist, sondern vielmehr auf das zu erwärmende Material selbst (z.B. in "Direktfeuerungsanlagen"), werden die Asche/Staub und Aerosole direkt in den zu erwärmenden Materialstrom eingebunden und im Prozesszyklus gemeinsam mit dem Material mitgeführt. Zum Teil werden sie verbrannt bzw. sie gelangen in die Rauchgase und zum Teil werden sie mit dem fertig erwärmten bzw. wärmebehandelten Material aus dem Arbeitsprozess wieder ausgetragen. Das Abscheiden ist dadurch auch mit bestehenden Rauchgasreinigungseinrichtungen, beispielsweise Filter, ohne weiteres bewältigbar, sodass die Feuerungsanlage diesbezüglich nicht um- bzw. aufgerüstet werden muss. Auch andere Anlagenteile sind durch die erhöhten Mengen an Asche/Staub und Aeorosolen nicht negativ beeinträchtigt. Gleich wie viel bei der Verbrennung gebildet wird, können die Asche- /Staub- und Aerosolmengen für die Anlage und in weiterer Folge für den gesamten Verfahrensablauf nicht störend wirken.

Eine zusätzlicher Vorteil ist, dass in den üblichen "Direktfeuerungsanlagen" ein mehrmaliger Durchlauf des Prozessstroms, z.B. in Zusammenhang mit Stoffkreisläufen und/oder Rauchgasrückführungen, vorgenommen wird, sodass Asche-/Staub- und Aerosol-Anteile, die weiter (ver)brennbar sind, reduziert werden können. Die Mengen sind somit nicht mehr in einem schädlichen Ausmaß vorhanden und können sich dadurch nicht mehr negativ auf den Betrieb der Feuerungsanlagen auswirken.

Auch das Problem der Schlackenbildung - aufgrund der erhöhten Aerosolbildung aus der Glycerinphasenverbrennung - ist bei der erfindungsgemäßen Verwendung gemindert bzw. ausgeschalten. Da die Verbrennungsprodukte der Glycerinphase unmittelbar in den zu erwärmenden Materialstrom gelangen, werden sie unverzüglich aus dem Bereich des die Stützflamme erzeugenden Brennerkopfs oder der Brennerdüse abgezogen und eine Verschlackung dieser Anlagenteile kann somit gar nicht stattfinden.

Unter der direkten Erwärmung eines zu erwärmenden Materials wird gemäß der Erfindung der Einfluss erhöhter Temperaturen auf alle, zumeist festen Materialien, verstanden, die erwärmt aber auch chemisch/physikalisch verändert oder umgesetzt werden sollen. Zu erwärmende Materialien sind z.B. Metalle, Nichtmetalle, Legierungen, gesteinsbildende Materialien, wie Kalke, Tone, mineralische Stoffe, wie Keramik, Steingut, Steinzeug und vieles mehr. Unter dem Begriff Erwärmung wird hiermit auch die Wärmebehandlung verstanden. Weiters ist hier der Begriff Wärme dem Begriff Hitze gleichgesetzt, wobei hierunter beispielsweise Vorwärmen, Brennen, Glühen, Härten, insbesondere Kalzinieren, Sintern und dgl. verstanden wird.

Gemäß der Erfindung wird die Glycerinphase vorzugsweise zu 100%, also als Hauptfeuerungsmittel, verwendet. Hierbei werden keine zusätzlichen Brennstoffe als Feuerungsmittel zur direkten Erwärmung eines zu erwärmenden Materials eingesetzt. Dabei können beispielsweise bestehende hohe Temperaturen im Brennraum eine Eigenzündung der Glycerinphase herbeiführen, oder aber geeignete Zündhilfsmittel zwecks Zündung der Glycerinphase herangezogen werden.

Je nach Bedarf können auch weniger als 100% der Glycerinphase verwendet werden. Demnach kann die Glycerinphase gemäß einem Merkmal der Erfindung als Zusatzbrennstoff, als Zusatzfeuerungsmittel, verwendet werden, wobei es sich hierbei gezeigt hat, dass das Vorsehen einer Stützflamme (oder auch Zündflamme) aufgrund der schweren Brenn- bzw. Entzündbarkeit der Glycerinphase bevorzugt sein kann, da sie eine geeignete Zündenergie für die Glycerinphase zur Verfügung stellen kann. Dabei muss die Stützflamme nicht stetig (während der Feuerung der Glycerinphase) brennen, sondern sie kann nach einer Entzündung der Glycerinphase abgeschaltet werden, wenn die Glycerinphase aufgrund der bestehenden hohen Temperaturen selbstständig brennen kann.

Als Brennstoffe für die Stützflamme können flüssige, feste oder gasförmige Brennstoffe eingesetzt werden, wie fossile und/oder Ersatzbrennstoffe, beispielsweise Öl und/oder andere Flüssigbrennstoffe, Kohle, Koks, Hackgut, Pellets und/oder andere Feststoffe, sowie Erdgas (Methan) oder andere gasförmige Brennstoffe oder aber auch Gemische.

Es hat sich gezeigt, dass besonders gute Ergebnisse hinsichtlich einer für den Betrieb von "Direktfeuerungsanlagen" störungsfreien Verwendung der Glycerinphase erzielt werden können, wenn die Glycerinphase in einer Menge von etwa 5 % bis etwa 85 %, vorteilhafterweise bis etwa 75 % Masse des verwendeten Brennstoffs verwendet wird.

Die Inhaltsstoffe der Glycerinphase können je nach den für die Biodieselerzeugung eingesetzten Ausgangsstoffen, wie Rapsöl, Altspeisefett, Sojaöl, Palmöl und anderen Stoffen, variieren. Beispielsweise könnte die verwendete Glycerinphase bis zu etwa 50 % Glycerin, bis zu etwa 20 % Methanol und bis zu etwa 15 % Wasser umfassen. Sie kann auch weitere organische Bestandteile enthalten, die in Summe bis zu etwa 40 oder 50 % der Glycerinphase ausmachen können.

Hinsichtlich der Effektivität der Verbrennung ist zu bevorzugen, dass die verwendete Glycerinphase einen Mindestheizwert von etwa 10.000 - 20.000J/g, vorzugsweise 18.000 J/g, aufweist.

Es hat sich als besonders vorteilhaft erwiesen, wenn die Glycerinphase unaufbereitet verwendet wird. Dabei kann die Glycerinphase als solche, wie sie in der Biodieselproduktion anfällt, unmittelbar als erneuerbarer Energieträger genutzt werden, ohne dass sie technisch und energetisch aufwändigen Verfahren zu deren Aufbereitung bzw. Vorbehandlung vor ihrem Einsatz als Brennstoff, gleich ob als Hauptfeuerungsmittel oder als Zusatzfeuerungsmittel, unterzogen werden muss. Dies ermöglicht eine zum Teil enorme Kosteneinsparung, sodass auch die wirtschaftliche Verwertbarkeit der als Nebenprodukt geltenden Glycerinphase gefördert wird.

Diesbezüglich ist es auch günstig, wenn die Glycerinphase in Feuerungsanlagen, insbesondere "Direktfeuerungsanlagen", mit bestehenden an sich bekannten Rauchgasreinigungseinrichtungen verwendet wird. Damit sind keine Kosten- und Arbeitsaufwendungen in Zusammenhang mit den Um- bzw. Aufrüstungen von vorhandenen Betriebsanlagenteilen notwendig, die eine störungsfreie und reibungslose Verbrennung der Glycerinphase überhaupt erst ermöglichen.

In Zusammenhang mit der Verwendung der Glycerinphase als Zusatzbrennstoff, vorzugsweise zusammen mit zumindest einer Stützflamme, ist es hinsichtlich des Einbringens der Glycerinphase von Vorteil, wenn die Glycerinphase der zumindest einen Stützflamme direkt zugeführt wird. Dabei ist es besonders vorteilhaft, wenn die für die Glycerinphase vorgesehene Zuführeinrichtung und die Stützflamme nebeneinander angeordnet sind. Je nach Vorliegen der Anlagengegebenheiten können beispielsweise zwei oder mehrere separate Brenner bzw. Brenndüsen, einer für die Stützflamme und ein weiterer für die Zufuhr der Glycerinphase, vorgesehen sein, die nebeneinander, beispielsweise parallel zueinander, angeordnet sind, sodass die Zufuhr der Glycerinphase direkt in die Stützflamme erfolgt und sich die Glycerinphase durch die Stützflamme entzünden kann. Es ist aber auch denkbar, dass die Zuführeinrichtung für die Glycerinphase nicht parallel zum Brenner für die Stützflamme angeordnet ist, sondern die Glycerinphase der Stützflamme in einem Winkel zugeführt wird.

Alternativ dazu kann vorgesehen sein, dass die Glycerinphase als Brennstoffgemisch gemeinsam mit dem Brennstoff für die Stützflamme zur Erwärmung des zu erwärmenden Materials verwendet wird. Dies bringt den Vorteil, dass eine zusätzliche Zuführvorrichtung zum Einbringen der Glycerinphase in den Brennraum, in die Nähe der Stützflamme, für deren Zündung nicht erforderlich ist. Dabei ist es im Falle der Verwendung einer erhöhten Menge an Glycerinphase günstig, dem Brennstoffgemisch Mittel beizumengen, um den Flammpunkt bzw. Zündpunkt des Brennstoffgemisches zu verringern.

Die Glycerinphase kann als kontinuierlicher Brennstoff zur zumindest einen Stützflamme verwendet werden, wobei sie stetig, d.h. ohne Unterbrechung, zur Stützflamme für die Erwärmung des zu erwärmenden Materials zugeführt wird. Selbstverständlich ist es auch möglich, die Glycerinphase als diskontinuierlicher Brennstoff zur zumindest einen Stützflamme zu verwenden, wobei die Zuführung von Glycerinphase je nach Bedarf erfolgen kann; d.h. auch mit Unterbrechungen.

Es soll erwähnt sein, dass bei der erfindungsgemäßen Verwendung der Glycerinphase das zu erwärmende Material bevorzugterweise entgegen der Rauchgasströmungsrichtung eingebracht wird, wobei die Rauchgase das Material vorwärmen können.

Zweckmäßigerweise kann die Glycerinphase in einer an sich bekannten Feuerungsanlage verwendet werden, bei welcher nicht nur in einem Anlagenbereich, sondern in mehreren, ergänzenden Anlagenbereichen gefeuert werden kann; beispielsweise zwecks Vorwärmen, Trocknen, Austreiben, Kalzinieren oder dgl. des Materials.

Hierbei hat sich gezeigt, dass die Glycerinphase nicht nur für den "Hauptbrennraum", sondern für die ggf. vor- oder nachgeschalteten Anlagenbereiche einer Feuerungsanlage gut geeignet ist. In diesem Zusammenhang ist es besonders vorteilhaft, die Glycerinphase als Brennstoff in einem Drehrohrofen zu verwenden.

Alternativ zur Verwendung der Glycerinphase in einem Drehrohrofen hat es sich ebenfalls als vorteilhaft erwiesen, dass die Glycerinphase als Brennstoff in einem Ofen verwendet wird, der gängigerweise zur Herstellung von gebranntem Kalk (Branntkalk, Baukalk, etc.) eingesetzt wird. Derartige Kalköfen können im Gleich- aber auch im Gegenstrom betrieben werden, wie z.B. Schachtöfen.

Besonders günstig ist es, wenn die Glycerinphase als Brennstoff zur Herstellung von hydraulischen und/oder nicht-hydraulischen Bindemitteln, wie gebrannter Kalk, Zement, Gips und dgl. verwendet wird. Gerade in einem solchen Anwendungsfeld können die vermehrt durch die Verbrennung der Glycerinphase entstehenden Asche/Staub- und Aerosolanteile keine negativen Einflüsse auf die Betriebsanlagen verursachen, da aufgrund der Herstellungsmethoden keine Anlagenteile, wie Plattenwärmetauscher oder dgl., vorgesehen sind, an denen sich Asche/Staub- sowie Aerosol-Teile ablagern können. Die Asche-/Staub- und Aerosolanteile können selbst in Kombination mit den Drehrohröfen beispielsweise verwendeten Zyklonwärmetauschern, die gängigerweise bei der Herstellung von Klinker eingesetzt werden und in denen das zu erwärmende Material mittels heißer Abgase aus dem Brennraum vorbehandelt (vorgewärmt) wird, nicht störend wirken. In die Zyklonwärmetauscher gelangte Asche-/Staub- und Aerosolanteile werden mittels Schwerkraft mit dem zu erwärmenden Materialstrom in den Brennraum befördert, dort ggf. verbrannt und mit dem wärmebehandelten Material - eingebunden in das erhaltene Produkt - aus der Feuerungsanlage ausgetragen. Der Rest wird von den Rauchgasreinigungseinrichtungen erfasst.

Wie bereits erwähnt ist es von Vorteil, die Glycerinphase als Brennstoff in einer Feuerungsanlage zur Herstellung von Klinker, insbesondere Zementklinker, bzw. zur Kalzinierung von Klinker, zu verwenden.

Weiters ist es günstig, die Glycerinphase als Brennstoff in einer Feuerungsanlage zur Herstellung von Gips zu verwenden.

Alternativ zur Herstellung von hydraulischen und/oder nicht-hydraulischen Bindemitteln ist es möglich, die Glycerinphase als Brennstoff in einer Feuerungsanlage, die das Material ohne zwischengeschaltetem Anlagenbauteil erwärmt bzw. wärmebehandelt, zur Herstellung von Ziegeln zu verwenden.

Weiters ist es möglich, die Glycerinphase auch als Brennstoff in einer Feuerungsanlage für die Stahlproduktion zu verwenden, beispielsweise als Brennstoff bzw. Reduktionsmittel für die Roheisen- und Stahlproduktion.

Demnach kann die Glycerinphase erfindungsgemäß überall dort eingesetzt werden, wo ein Material direkt im Brennraum erwärmt bzw. wärmebehandelt wird.

### Beispiel: Glycerinphase als Brennstoff in einem Drehrohrofen:

Die Glycerinphase wird als Zusatzbrennstoff in einem Drehrohrofen mit einem Mehrkanalbrenner als Drehrohrofenbrenner (es können gleichzeitig mehrere feste und flüssige Brennstoffe aufgegeben werden) verwendet. Der Drehrohrofen ist Teil einer thermischen Anlage zur Herstellung von Zementklinker, die im Wesentlichen Wärmetauscher mit Kalzinator, Drehrohrofen und Klinkerkühler umfasst. Die Anlage wird im Gegenstromverfahren betrieben, wobei die Zuführung des in der Rohmühle fein aufgemahlenen Rohmehls in die oberste Stufe des Wärmetauschers erfolgt, in der die Vorwärmung und Entsäuerung des Rohmehls vorgenommen wird. Im Drehrohrofen wird das Mehl zu Zementklinker gebrannt, und danach der ca. 1500°C heiße Klinker im nachgeschalteten Kühler gekühlt. Das Gas (Verbrennungsluft) tritt in den Kühler mit Umgebungslufttemperatur ein, wird dort von dem heißen Klinker erwärmt, dient am Drehrohrofenbrenner zum Verbrennen des jeweils eingesetzen Brennstoffs - wodurch die erforderliche Brenntemperatur erreicht wird -, durchströmt den Drehrohrofen und gibt anschließend im Wärmetauscher seine Wärme an das Rohmehl ab, das dadurch im Kalzinator entsäuert wird.

Die Glycerinphase wird - ergänzend zu Braunkohlestaub, Tiermehl, Tierfett und Kunststoffflocken als weitere verwendete Brennstoffe - kontinuierlich in einer Qualität von etwa 21 MJ/kg und < 0,1 % Schwefelanteil im Drehrohrofen verfeuert. Dabei wird die Glycerinphase in einem Tankcontainer mit einem Füllvolumen von etwa 24 m³ angeliefert, wobei sie mit einer frequenzgesteuerten und mit einem Durchflusszähler ausgestatteten Schraubenspindelpumpe direkt zum Hauptbrenner des Drehrohrofens gefördert wird. Die verfeuerte Menge beträgt konstant etwa 1000 1/h. Die Brennstoffmenge entspricht einer Brennstoffwärmeleistung von etwa 25 % des Drehrohrofenbrenners.

## Patentansprüche

1. Verwendung der bei der Biodieselerzeugung anfallenden Glycerinphase als Brennstoff zur direkten Erwärmung eines zu erwärmenden Materials.

2. Verwendung nach Anspruch 1, **dadurch gekennzeichnet, dass** die Glycerinphase als Zusatzbrennstoff, vorzugsweise zusammen mit mindestens einer Stützflamme, verwendet wird.

3. Verwendung nach Anspruch 2, **dadurch gekennzeichnet, dass** die Glycerinphase in einer Menge von etwa 5 bis etwa 85 %, vorteilhafterweise bis etwa 70 %, des für die Stützflamme verwendeten Brennstoffs verwendet wird.

4. Verwendung nach einem der Ansprüche 1 bis 3, **dadurch gekennzeichnet, dass** die Glycerinphase im Wesentlichen bis zu etwa 50 % Glycerin, bis zu etwa 20 % Methanol und bis zu etwa 15 % Wasser umfasst.

5. Verwendung nach einem der Ansprüche 1 bis 4, **dadurch gekennzeichnet, dass** die verwendete Glycerinphase einen Mindestheizwert von etwa 10.000 bis etwa 20.000 J/g, vorzugsweise etwa 18.000 J/g, aufweist.

6. Verwendung nach einem der Ansprüche 1 bis 5, **dadurch gekennzeichnet, dass** die Glycerinphase unaufbereitet verwendet wird.

7. Verwendung nach einem der Ansprüche 2 bis 6, **dadurch gekennzeichnet, dass** die Glycerinphase der zumindest einen Stützflamme direkt zugeführt wird, wobei die für die Glycerinphase vorgesehene Zuführeinrichtung und die Stützflamme nebeneinander angeordnet sind.

8. Verwendung nach einem der Ansprüche 1 bis 7 in Feuerungsanlagen mit bestehenden an sich bekannten Rauchgasreinigungseinrichtungen.

9. Verwendung nach einem der Ansprüche 1 bis 8, **dadurch gekennzeichnet, dass** die Glycerinphase als Brennstoff in einem Drehrohrofen verwendet wird.

10. Verwendung nach einem der Ansprüche 1 bis 8, **dadurch gekennzeichnet, dass** die Glycerinphase als Brennstoff in einem Schachtofen verwendet wird.

11. Verwendung nach einem der Ansprüche 1 bis 10, **dadurch gekennzeichnet, dass** die Glycerinphase als Brennstoff zur Herstellung von hydraulischen und/oder nicht-hydraulischen Bindemitteln, wie gebrannter Kalk, Zement, Gips und dgl. verwendet wird.

12. Verwendung nach Anspruch 11, **dadurch gekennzeichnet, dass** die Glycerinphase als Brennstoff in einer Feuerungsanlage zur Herstellung von Klinker, insbesondere Zementklinker, verwendet wird.

13. Verwendung nach Anspruch 11, **dadurch gekennzeichnet, dass** die Glycerinphase als Brennstoff in einer Feuerungsanlage zur Herstellung von Gips verwendet wird.

14. Verwendung nach einem der Ansprüche 1 bis 10, **dadurch gekennzeichnet, dass** die Glycerinphase als Brennstoff in einer Feuerungsanlage zur Herstellung von Ziegeln verwendet wird.

15. Verwendung nach einem der Ansprüche 1 bis 10, **dadurch gekennzeichnet, dass** die Glycerinphase als Brennstoff in einer Feuerungsanlage für die Stahlproduktion verwendet wird.
